# FASCICULE DE BREVET EUROPEEN

(11) **EP 4 734 017 B1**
(45) Date de publication et mention de la délivrance du brevet: **02.09.2026**
(21) Numéro de dépôt: 24315538.9
(22) Date de dépôt: 27.11.2024
(51) Int. Cl.: G06N 20/00, H04L 67/60, H04W 24/02, H04L 9/40, H04W 12/02, H04W 12/12

(54) **ARCHITECTURE DE RÉSEAU 5G POUR LE TRAITEMENT INTÉGRÉ DE GARDE-FOUS APPLIQUÉS À DES REQUÊTES LLM**
5G-NETZWERKARCHITEKTUR ZUR INTEGRIERTEN VERARBEITUNG VON SCHUTZ- UND DLM-ANFRAGEN
5G NETWORK ARCHITECTURE FOR INTEGRATED PROCESSING OF CUSTODYS APPLIED TO LLM REQUESTS

(30) Priorité: 23.10.2024 EP 24315493
(43) Date de publication de la demande: 29.04.2026
(73) Titulaire: ILIAD, 75008 Paris (FR)
(72) Inventeur: Sayad, Khaled, 75008 Paris (FR); Escande, Patrick, 75008 Paris (FR)
(74) Mandataire: Dupuis-Latour, Dominique

(56) Documents cités:
- WO-A1-2023/191479
- GUANQIAO QU ET AL: "Mobile Edge Intelligence for Large Language Models: A Contemporary Survey", ARXIV.ORG, CORNELL UNIVERSITY LIBRARY, 201 OLIN LIBRARY CORNELL UNIVERSITY ITHACA, NY 14853, 9 July 2024 (2024-07-09), XP091833571
- XIONGWEI JIA CHINA UNICOM ET AL: "Updating the sections and appendixes of CG-AISEC deliverable", vol. ALL/17, 14 July 2024 (2024-07-14), pages 1 - 72, XP044397315, Retrieved from the Internet <URL:https://www-api.itu.int/ifa/t/2022/sg17/exchange/cg-aisec/2024-07-16-E_meeting/inputs/CG-AISEC-I-29-240716-CU.docx> [retrieved on 20240714]

## Description

L'invention concerne les réseaux cellulaires mobiles de cinquième génération (5G), en particulier une architecture spécifiquement adaptée au traitement des interactions entre des équipements utilisateurs (UE) et des ressources associées à des grands modèles de langage (LLM).

Dans la présente description, par "utilisateurs", on entendra non seulement des personnes physiques connectées au réseau 5G au moyen d'un smartphone en tant qu'UE, mais également, et surtout, des dispositifs matériels autonomes tels que par exemple des robots, des caméras de surveillance ou des véhicules pilotés, connectés au réseau cellulaire 5G et dont le profil est déjà renseigné dans une base d'utilisateurs du réseau cœur 5G.

### État de la technique antérieure

Le point de départ de l'invention est la constatation que ces divers utilisateurs sont susceptibles d'envoyer à des applications LLM des requêtes qui peuvent être produites en très grand nombre et à des cadences relativement élevées, notamment dans le cas des dispositifs matériels autonomes.

Une application LLM fonctionne en exécutant un modèle déjà entraîné pour traiter les tokens (au sens de l'intelligence artificielle) des utilisateurs et générer les sorties correspondantes. Ce processus peut être optimisé davantage en utilisant des techniques connues telles que la génération augmentée par récupération (RAG), l'optimisation du cache, le routage des LLM, etc.

Dans le cas des réseaux 5G interfacés à des applications LLM (réseaux 5G orientés IA), ceux-ci doivent être optimisés pour réduire la latence et assurer un débit élevé, par exemple pour traiter un très grand nombre de tokens par requête. WO 2023/191479 A1 propose de mettre en œuvre des techniques de gestion d'un réseau 5G pour la délivrance d'une fonction IA appelée par un équipement utilisateur.

L'invention vise plus particulièrement l'intégration et la mise en œuvre, dans un tel réseau 5G orienté IA, de fonctions dites de "qarde-fou" ou "guardrails", ci-après "rails", appliquées aux requêtes LLM émises par les UE à destination des applications LLM ("rails d'entrée") et/ou aux réponses LLM renvoyées en retour aux UE par les applications LLM ("rails de sortie").

Les rails d'entrée analysent les requêtes émises par les UE pour opérer un contrôle préventif visant par exemple à empêcher que du contenu inapproprié ou non pertinent ne soit transmis à l'application LLM : requêtes hors sujet, données personnelles identifiables (mots de passe, adresses électroniques, etc.), tentatives de "jailbreaking" lorsqu'un utilisateur cherche à contourner les protections de l'application LLM, etc. Si une telle situation est détectée, le rail LLM déclenchera une action appropriée, telle que le blocage de la transmission de la requête à l'application LLM, ou bien la modification de la requête, par exemple en masquant ou en supprimant une partie de contenu considérée comme confidentielle.

Les rails de sortie, quant à eux, analysent les réponses produites par les applications LLM pour les valider avant transmission à l'UE requérant. Les anomalies détectées pouvant conduire à une action déclenchée par le rail de sortie sont notamment : des "hallucinations" (au sens de l'intelligence artificielle), des réponses non conformes à des règles prédéterminées de modération, des réponses dont la syntaxe n'est pas conforme, etc. L'action déclenchée sur détection de telles situations peut être le blocage pur et simple de la transmission de la réponse à l'UE, ou la mise en conformité de cette réponse par filtrage et modification de son contenu.

Dans la suite, on décrira surtout l'invention en réponse aux rails d'entrée, c'est-à-dire au traitement des requêtes émises par les UE à destination des applications LLM. Mais il convient de préciser que tout ce qui sera expliqué dans ce cadre sera également transposable, de façon implicite, à des rails de sortie.

Actuellement, les rails sont conçus par les développeurs des applications LLM, qui les intègrent à la logique de leur application et en assurent le déploiement dans le cadre du pipeline de services LLM proposé aux utilisateurs.

La conception des rails LLM par les développeurs doit prendre en compte un certain nombre d'impératifs imposés par le réseau, notamment en termes de latence, d'utilisation des ressources, d'efficacité globale, etc.

Par ailleurs, si l'on se place du point de vue du fournisseur d'accès réseau, le transfert jusqu'aux serveurs hébergeant les applications LLM de paquets de requêtes LLM avec des contenus inappropriés ou invalides implique une consommation inutile de ressources, avec des conséquences négatives sur la performance des ressources LLM du fait de l'allongement des files d'attente, de l'accroissement du temps de traitement des requêtes, et de la charge accrue des serveurs hébergeant les applications LLM.

La faible latence est également un paramètre particulièrement critique, notamment lorsque les UE sont des équipements autonomes purement matériels tels que des robots, des caméras ou des véhicules pilotés. L'introduction de rails LLM dans les processus de mise en œuvre des LLM ne doit pas avoir d'impact significativement préjudiciable aux actions produites par ces équipements.

Enfin, lorsque les requêtes LLM sont associées à des tokens payants ou contingentés (par exemple un contingentement par département d'une entreprise), il est important d'en limiter l'usage, sachant que toute requête non conforme bloquée par un rail LLM aura inutilement entraîné la consommation d'un token.

### Exposé de l'invention

Le but de l'invention est de proposer une architecture de réseau mobile 5G pour le traitement de requêtes LLM qui soit adaptée à la mise en œuvre efficace de rails LLM d'entrée et/ou de sortie avec : minimisation de la latence, économie des ressources réseau utilisées, optimisation de la consommation des tokens, limitation de la surcharge des serveurs d'application LLM et, pour les développeurs, flexibilité de mise en œuvre des rails LLM lors de la conception des applications LLM. L'idée de base de l'invention consiste à tirer parti de l'architecture distribuée et de la flexibilité des réseaux 5G pour dissocier les rails LLM des applications LLM auxquelles ils sont associés, et les déporter vers des fonctions du réseau 5G localisées à proximité des utilisateurs.

Plus précisément, l'invention propose de délocaliser les rails LLM vers des fonctions de plan utilisateur du réseau 5G (fonctions User Plane Function, UPF, au sens des réseaux 5G), ce plan utilisateur faisant également fonction de plan de transport des données pour l'acheminement des paquets de données de/vers les UE entre les UE et le plan de contrôle de réseau cœur 5G.

Une telle architecture, où les rails LLM seront exécutés localement au niveau du plan utilisateur/plan de données, à proximité des utilisateurs, profite de la disponibilité des données comportementales de ces derniers, puisqu'ils sont connectés au réseau 5G et donc directement au plan utilisateur.

Cet agencement, en localisant l'exécution des rails LLM, fortement consommatrice de ressources de calcul et d'exigences de QoS vers des éléments du réseau 5G à proximité des utilisateurs, permet d'alléger d'autant les ressources distantes (ressources edge ou cloud). En d'autres termes, le fait de bloquer directement à la source les requêtes non conformes par des rails LLM au niveau des UPF, réduit le besoin de transmettre toutes les requêtes vers des centres de données lointains, économisant ainsi de la bande passante et réduisant la consommation énergétique.

À cet effet l'invention propose, plus précisément, une architecture de réseau mobile, pour le traitement de requêtes LLM et/ou de LLM, comprenant, de manière en elle-même connue, un réseau 5G avec : un réseau d'accès radio pour la communication radiofréquence avec des équipements utilisateurs, UE ; un réseau distribué de Fonctions de plan utilisateur, UPF programmables, faisant également fonction de plan de transport de données 5G pour l'acheminement de paquets de données de/vers les UE ; et un plan de contrôle de réseau cœur comprenant des fonctions 5G selon 3GPP.

De façon caractéristique de l'invention, les UPF du réseau 5G sont programmées pour exécuter localement des rails LLM, faisant fonction de garde-fous d'entrée et/ou de sortie LLM à l'égard des requêtes LLM et/ou des réponses LLM, respectivement, par : analyse du contenu des requêtes LLM émises par les UE à destination des applications LLM, et/ou des réponses LLM renvoyées en retour par les applications LLM à destination des UE, par rapport à un corps de règles prédéterminé ; et, en fonction du résultat de l'analyse, autorisation ou bien blocage de la transmission, via l'UPF, de la requête LLM et/ou de la réponse LLM. Selon diverses caractéristiques subsidiaires avantageuses :
- les rails LLM sont conservés dans un registre de rails LLM, le registre de rails LLM est distinct du réseau 5G mais interfacé avec les fonctions 5G du plan de contrôle de réseau cœur du réseau 5G, et l'architecture comprend en outre des moyens pour transformer les rails LLM du registre de rails en programmes aptes à être chargés dans les UPF programmables du réseau 5G ;
- dans ce dernier cas, les rails LLM sont avantageusement déployés en tant que fonctions réseau containérisées, CNF, sur un serveur conservant le registre de rails LLM ;
- le corps de règles prédéterminé est conservé dans la fonction de contrôle de politique, PCF, du plan de contrôle de réseau cœur du réseau 5G ;
- les UPF du réseau 5G sont programmées pour modifier sélectivement le contenu des données de la requête LLM en fonction du résultat de l'analyse des requêtes LLM émises par les UE en cas d'autorisation de la transmission à l'application LLM, notamment par masquage d'un contenu considéré comme confidentiel par ladite analyse ;
- les UPF du réseau 5G sont programmées pour évaluer une métrique d'utilisation des applications LLM par les UE ou par un sous-ensemble segmenté d'UE, et déclencher dynamiquement une action en cas de franchissement d'un seuil prédéterminé par la métrique ;
- dans ce dernier cas, l'action est l'instanciation automatique d'un ou plusieurs rails LLM au franchissement dudit seuil prédéterminé ;
- il est en outre prévu des moyens de configuration LLM pour, avant traitement de requêtes LLM par une application LLM, enregistrer préalablement un identifiant de l'application LLM dans la fonction de référentiel de fonctions réseau, NRF, du plan de contrôle de réseau cœur du réseau 5G ;
- il est en outre prévu des moyens de configuration QoS pour, avant traitement de requêtes LLM par une application LLM, enregistrer préalablement des règles de qualité de service, QoS, propres aux UE ou à des sous-ensembles segmentés d'UE, dans la fonction de contrôle de politique, PCF, du plan de contrôle de réseau cœur du réseau 5G ;
- ces règles de QoS peuvent notamment comprendre des règles relatives à des paramètres de : débit binaire ; latence ; bande passante ; nombre maximum de tokens par seconde ; proximité du serveur d'applications LLM ; préservation de la confidentialité des données émises par les UE ; privilèges utilisateur ; et toute combinaison des précédents ;
- le registre de rails LLM est segmenté en une pluralité de domaines distincts, chaque domaine comprenant un groupe de rails propre à un groupe prédéfini respectif d'UE, et les UPF du réseau 5G sont programmées pour discriminer les UE en fonction du domaine auquel ils appartiennent, et interdire la transmission via l'UPF des requêtes LLM relatives à un domaine auquel n'appartient pas un UE requérant correspondant ;
- lorsque les UE sont regroupés en domaines distincts, l'analyse du contenu des requêtes LLM émises par les UE à destination des applications LLM comprend une fonction de découverte de service apte à détecter la disponibilité d'une application LLM particulière pour un UE requérant, et les UPF du réseau 5G sont programmées pour interdire la transmission via l'UPF des requêtes LLM pour une application LLM relative à un domaine auquel n'appartient pas l'UE requérant ;
- lorsque des niveaux de privilège sont attribués aux UE, les UPF du réseau 5G sont programmées pour discriminer les UE en fonction du niveau de privilège qui leur a été attribué, et interdire la transmission via l'UPF des requêtes LLM relatives à un niveau de privilège supérieur à celui de l'UE requérant, de manière à opérer ainsi un contrôle de type contrôle d'accès à base de rôles, RBAC, aux applications LLM ;
- dans les cas précédents impliquant des domaines ou des niveaux de privilège, les UPF du réseau 5G sont avantageusement programmées pour discriminer les UE sur la base de l'adresse IP de session attribuée à l'UE requérant, au niveau de la fonction de gestion de session, SMF, du plan de contrôle de réseau cœur du réseau 5G ;
- les UPF du réseau 5G sont programmées pour compter un nombre de blocages successifs par un UPF à l'encontre de requêtes LLM réitérées en provenance d'un même UE, et pour produire un message en retour lorsque ledit nombre dépasse un seuil prédéterminé ;
- les UPF sont programmées en langage P4 ;
- les UE sont des équipements du groupe comprenant des smartphones, des robots autonomes, et/ou des caméras de surveillance vidéo, comprenant un circuit permettant la connexion au réseau 5G et dont le profil est déjà renseigné dans une base d'utilisateurs du réseau cœur du réseau 5G.

### Brève description des dessins

La Figure 1 est un synoptique, sous forme de schéma par blocs, des différents éléments fonctionnels de l'architecture selon l'invention de traitement des rails LLM par un réseau 5G.
La Figure 2 illustre, également sous forme de schéma par blocs, l'interaction entre les différents éléments fonctionnels de la Figure 1, pour l'exécution des rails LLM selon les enseignements de l'invention.
La Figure 3 est un diagramme de flux décrivant l'enregistrement préalable des applications LLM et des règles de QoS auprès des éléments fonctionnels du plan de contrôle du réseau 5G.
La Figure 4 est un diagramme de flux décrivant l'intégration des applications LLM et de leurs règles d'usage auprès des éléments fonctionnels du plan de contrôle et du plan utilisateur du réseau 5G.
La Figure 5 est un diagramme de flux décrivant une mise en œuvre particulière de l'invention, visant à détecter un trafic anormalement élevé afin d'accroître si besoin le contrôle de ce trafic en déclenchant en réponse l'instauration automatique de rails LLM.
La Figure 6 est un diagramme de flux décrivant une autre mise en œuvre particulière de l'invention, visant à détecter une fréquence d'usage de requêtes LLM par un UE dépassant une limite autorisée, pour déclencher en réponse le blocage de l'UE fautif.

### Description détaillée de modes de réalisation de l'invention

On va maintenant décrire un exemple de mise en œuvre de l'invention en référence aux dessins annexés sur lesquels les mêmes références désignent d'une figure à l'autre des éléments identiques ou fonctionnellement semblables.

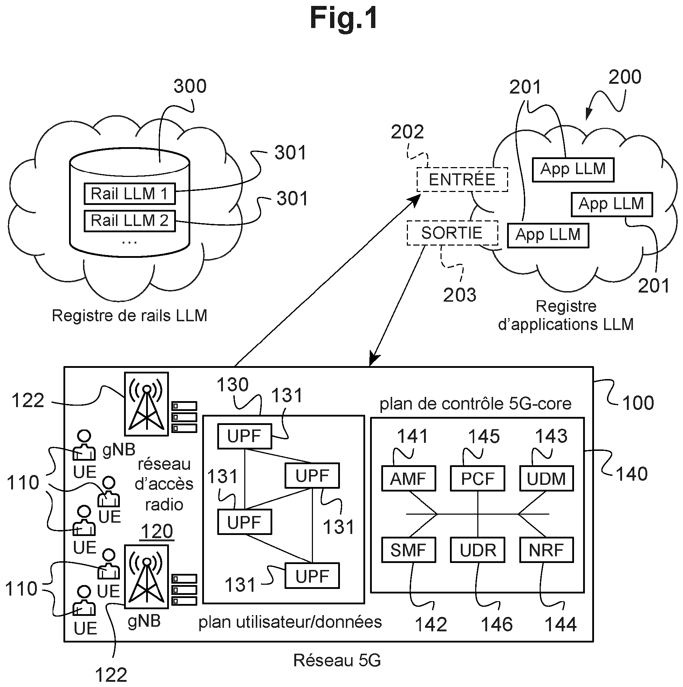

Sur la Figure 1, la référence 100 désigne les principaux éléments constitutifs, en eux-mêmes connus, d'un réseau 5G.

Les références 200 et 300 désignent globalement des ressources matérielles (serveurs, datacenters, etc.) utilisées par le réseau 5G 100 de façon délocalisée, proche ou distante (ressources dénommées "far edge", "edge", "core cloud", etc. selon le cas), respectivement pour y conserver un registre d'applications LLM 201 et un registre de rails LLM 301. En ce qui concerne les rails LLM 301, ceux-ci sont avantageusement déployés en tant que fonctions réseau containérisées, CNF, sur le serveur 300 conservant le registre de rails LLM.

Ces ressources matérielles sont en elles-mêmes connues, tant dans leur structure que dans la manière d'y accéder, et ne sont en elles-mêmes pas modifiées pour la mise en œuvre de l'invention.

Dans une configuration conventionnelle - et à la différence la présente invention -, les rails LLM sont intégrés aux applications LLM au niveau du registre d'applications LLM 200 (en entrée comme en 202 ou en sortie comme en 203), dans le cloud et donc de façon totalement externe au réseau 5G et à distance de ce réseau 5G.

Le réseau 100 est un réseau mobile 5G, cette dénomination étant entendue au sens spécifique tel que défini par les entités de normalisation, notamment le 3GPP. Il en sera de même pour les différents composants de ce réseau 5G cités dans la présente description, tels que "UPF", "plan de transport/plan de données", "plan de contrôle", "AMF", "SMF", "UDM", "NRF", "PCF", "UDR", etc., qui doivent être entendus dans leur sens particulier, compris de l'homme du métier spécialiste des réseaux de communication mobile.

La référence 110 désigne des équipements utilisateurs, UE, servant à échanger sans fil des informations avec le réseau 5G. Comme indiqué plus haut, ces utilisateurs peuvent être aussi bien des personnes physiques que des équipements purement matériels autonomes tels que robots, des caméras ou des véhicules, dont le profil est déjà renseigné dans le réseau 5G.

Le réseau 5G comprend une partie de réseau d'accès radio 120 avec un certain nombre de stations de base 122, désignées gNB dans la nomenclature des réseaux 5G.

Le réseau d'accès radio 120 est interfacé à un réseau distribué 130 de Fonctions de plan utilisateur, UPF dans la nomenclature des réseaux 5G, 131, le plan utilisateur faisant également fonction de plan de transport de données pour l'acheminement de paquets de données en provenance et à destination des UE 110.

On rappellera que, dans les réseaux 5G, le plan utilisateur/données est un plan programmable, ce qui permet de configurer directement et dynamiquement les UPF pour exécuter localement des tâches spécifiques liées à la gestion du pipeline des requêtes LLM.

De préférence, les UPF sont programmées de manière à répondre aux exigences suivantes, qui peuvent être en particulier atteintes avec un langage de programmation tel que le langage P4 :
- programmabilité avancée : P4 permet en effet de programmer le plan de données de manière flexible et personnalisée. Il est ainsi possible de définir et de modifier dynamiquement la manière dont les paquets de données sont traités dans le réseau, ce qui est crucial pour répondre aux exigences spécifiques des inférences LLM ;
- flexibilité du plan de contrôle et du plan de données : P4 offre une grande flexibilité pour programmer non seulement le plan de données 130, mais aussi pour interagir de manière fine avec le plan de contrôle 140.

Le plan utilisateur/plan de données 130 est interfacé à un plan de contrôle de réseau cœur 140 (5G-core), incluant les fonctions et les ressources telles que :
- AMF 141 : Access and Mobility-management Function ;
- SMF 142 : Session-Management Function ;
- UDM 143 : User-Data Management ;
- NRF 144 : Network-function Repository Function ;
- PCF 145 : Policy-Control Function ;
- UDR 146 : User-Data Repository, ce référentiel stockant notamment l'identité et le profil des différents UE connus du réseau.

Parmi ces fonctions, NRF, SMF et PCF seront plus particulièrement mises à profit dans le cadre de l'invention. Plus précisément :
- la fonction NRF est un registre de fonctions auprès duquel s'enregistrent toutes les instances des fonctions 5G afin qu'elles puissent être découvertes (service discovery) par les autres fonctions 5G. L'invention propose en outre d'y enregistrer aussi les instances des applications LLM, en y mentionnant les domaines spécifiques servis (cette notion de "domaine", entendue au sens d'un département d'entreprise, sera développée plus bas) ainsi que la plage correspondante des adresses IP des UE à servir ;
- la fonction SMF (en lien avec AMF) est chargée d'initier les sessions PDU des UE. Elle contrôle les UPF du plan utilisateur en les programmant pour établir, pour chaque UE, le routage entre la station de base où se trouve l'UE et les réseaux de données hors réseau 5G. Dans le cadre de l'invention elle sera également chargée, au niveau du plan de contrôle, de créer pour chaque UE connecté au réseau le lien avec les applications LLM destinataires des requêtes, en assurant en outre les règles de QoS prédéfinies associées ;
- la fonction PCF de contrôle des politiques sera par ailleurs utilisée, dans le cadre de l'invention, pour conserver un corps de règles d'usage applicables aux requêtes LLM par les rails LLM, le cas échéant sous forme segmentée entre des domaines distincts correspondant à différents groupes ou catégories d'utilisateurs.

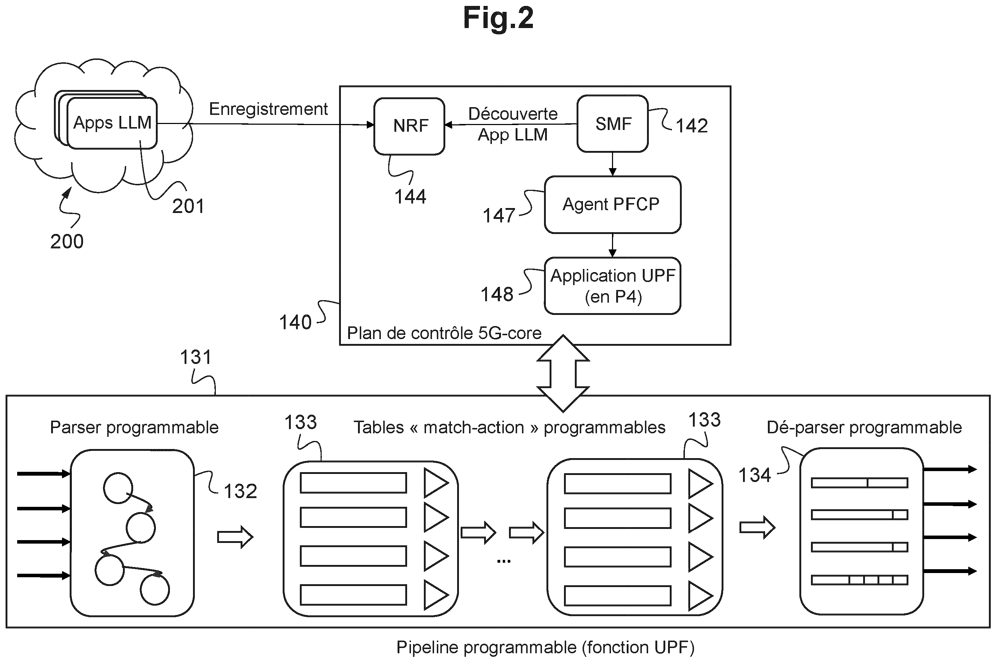

La Figure 2 illustre l'interaction entre les différents éléments fonctionnels de la Figure 1, pour l'exécution des rails LLM selon les enseignements de l'invention.

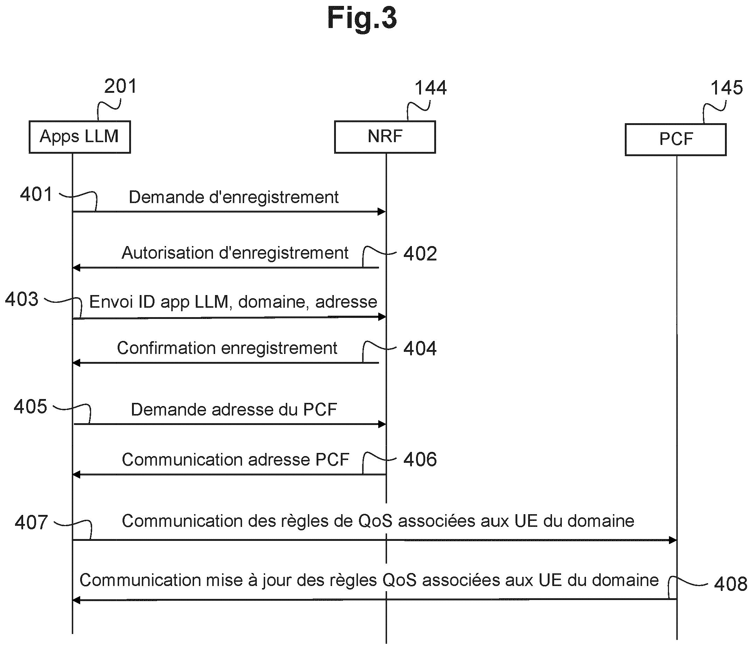

Au préalable, les applications LLM 201 conservées dans le registre distant 200 s'enregistrent auprès de la NRF 144 du plan de contrôle 5G 140. Le détail de cet enregistrement sera décrit en référence au diagramme de flux de la Figure 3.

Une fois les applications LLM enregistrées dans la NRF, elles pourront être découvertes, au niveau du plan de contrôle 5G 140, par la fonction SMF 142. Selon l'invention, outre son rôle d'initiation des sessions PDU des UE, le SMF est chargé de déployer les rails LLM sur les UPF. Ce déploiement est effectué par transformation du corps de règle des rails LLM en consignes "match-action" (c'est-à-dire que la détection dans une requête LLM d'une situation ou configuration prédéterminée déclenchera une action correspondante appropriée). Ces consignes sont transformés en programmes, notamment en programmes P4, puis chargées depuis le plan de contrôle 5G 140, par un agent PFCP (Packet Forwarding Control Protocol) 147 dans les UPF (bloc 148) du plan utilisateur 130.

Ces programmes P4 sont mis en œuvre au sein des UPF 131 du plan utilisateur 130 sous forme d'un pipeline de traitement des paquets, comprenant un parser programmable 132, les tables match-action des consignes LLM 133, et un dé-parser programmable 134.

Le parser 132 identifie les en-têtes des paquets entrants des requêtes envoyées par l'utilisateur, extrait ces en-têtes et les associe à des variables à manipuler par le programme. Ce parser est une machine à états dont les transitions d'un état à l'autre sont conditionnelles en fonction des valeurs des en-têtes : par exemple la présence d'une certaine adresse IP incluse ou non dans certaines plages d'adresses, les différentes plages correspondant à des domaines différents de l'entreprise dont sont issues les requêtes LLM des utilisateurs.

Les tables match-action 133 analysent les en-têtes délivrés par le parser programmable 132 et, en cas de concordance ("match") avec les règles prédéterminées chargées dans ces tables, les associent à des actions prédéterminées ("action").

Les actions déclenchées peuvent être le blocage pur et simple de la transmission des paquets par l'UPF à destination des applications LLM, ou bien une autorisation de la transmission à l'application LLM mais avec modification sélective du contenu des données de la requête, notamment par masquage d'un contenu considéré comme confidentiel : la requête sera alors transmise à l'application LLM, mais après masquage ou brouillage du contenu considéré comme ne devant pas sortir des limites du réseau 5G.

Les tables match-action peuvent également comprendre un certain nombre de règles correspondant à une segmentation de l'ensemble des utilisateurs susceptibles de se connecter au réseau 5G en sous-groupes distincts, ici dénommés "domaines", correspondant par exemple à des services différents d'une même entreprise (production, marketing, comptabilité, etc.) dont on ne souhaite pas que les utilisateurs d'un domaine puissent émettre des requêtes concernant un autre domaine de leur même entreprise.

Les UPF sont alors programmés pour discriminer les UE en fonction du domaine auquel ils appartiennent, par exemple sur la base de l'adresse IP de session attribuée à l'UE par le SMF 142, et interdire la transmission via l'UPF 131 des requêtes LLM formulées par un UE d'un domaine donné mais qui sont relatives à un domaine auquel n'appartient cet UE.

En variante ou en complément, la discrimination entre UE peut également s'effectuer sur la base de niveaux de privilège différents attribués aux UE. Les UPF sont alors programmés pour interdire la transmission des requêtes LLM relatives à un niveau de privilège supérieur à celui de l'UE requérant. On peut ainsi, dans le cadre de l'invention, opérer sur les requêtes LLM un contrôle de type contrôle d'accès à base de rôle, RBAC, n'autorisant qu'un accès conditionnel aux applications LLM.

Enfin, le dé-parser 134 assure la sérialisation des en-têtes modifiés, en respectant un ordre spécifique, et envoie le paquet résultant au commutateur suivant du plan de données.

Par ailleurs, le réseau des UPF 131 du plan utilisateur 130 peut être segmenté en UPF distincts ou groupes distincts d'UPF spécifiquement programmés avec des rails LLM correspondant à un domaine respectif, les UPF étant alors spécialisés sur l'un ou l'autre des domaines correspondant à des groupes d'utilisateurs correspondants respectifs.

La Figure 3 est un diagramme de flux décrivant l'enregistrement préalable des applications LLM et des règles de QoS auprès des éléments fonctionnels du plan de contrôle du réseau 5G.

À cet effet, l'application LLM 401, logée dans le cloud au niveau du registre d'applications LLM 200 (Figures 1 et 2), adresse à la NRF 144 du plan de contrôle 5G une demande d'enregistrement.

En réponse, en 402, la NRF indique à l'application LLM que cet enregistrement est autorisé et, en retour en 403, l'application LLM adresse un certain nombre d'informations permettant de la localiser : identifiant, adresse IP, éventuellement domaine concerné, etc.

Ces données d'identification sont enregistrées dans le plan de contrôle 5G dans la NRF qui confirme la bonne exécution de cet enregistrement, en 404.

Ensuite, l'application LLM demande, en 405, à la NRF que lui soit communiquée l'adresse de la PCF du plan de contrôle 5G, cette adresse lui étant communiquée en 406.

En 407, l'application LLM transmet à la PCF 145 les règles de QoS associées aux UE du domaine concerné, décrivant la manière dont sont gérés les rails LLM. Ces règles de QoS, qui correspondent aux "consignes match-action" de la Figure 2 qui seront implantées dans les UPF, peuvent notamment comprendre des règles relatives à des paramètres de :
- débit binaire ;
- latence ;
- bande passante ;
- nombre maximum de tokens par seconde ;
- proximité du serveur d'applications LLM ;
- préservation de la confidentialité des données émises par les UE ;
- privilèges utilisateur ;
- et toute combinaison des précédents.

Enfin, en 408, la PCF confirme à l'application LLM que ces règles ont bien été enregistrées en tant que politique de gestion des rails LLM.

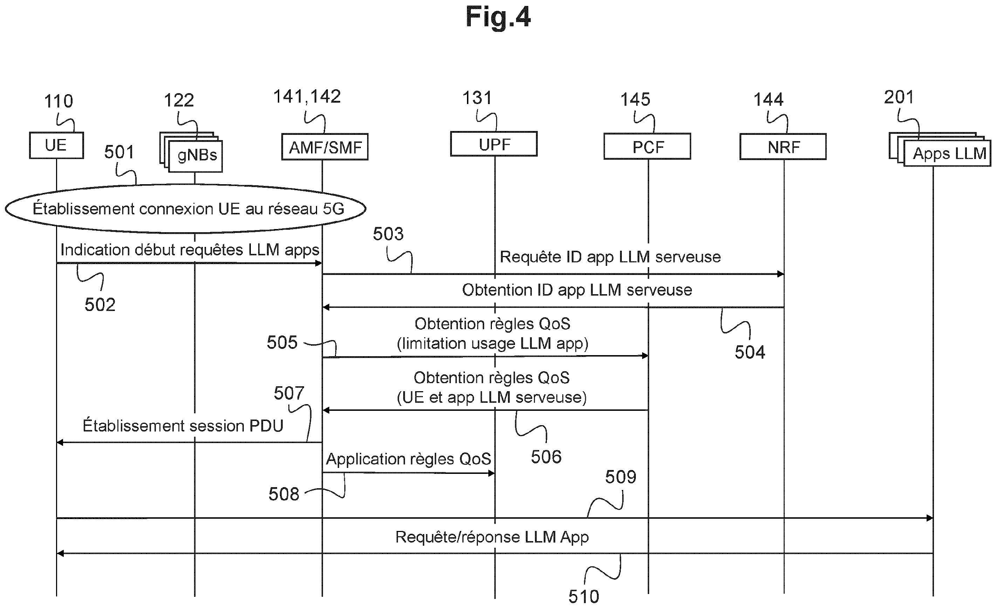

La Figure 4 est un diagramme de flux décrivant l'intégration des applications LLM et de leurs règles d'usage (règles de QoS) auprès des éléments fonctionnels du plan de contrôle 5G et du plan utilisateur du réseau 5G.

Après que l'UE 110 a établi, en 501, une connexion au réseau 5G par création d'une session à l'aide des fonctions AMF/SMF 141/142 du plan de contrôle 5G et via les gNB 122, l'UE indique, en 502, au plan de contrôle 5G qu'il souhaite accéder à une ou plusieurs applications LLM, par envoi de requêtes LLM correspondantes.

En 503, le plan de contrôle 5G adresse par l'AMF/SMF à la NRF 144 une requête d'identification de l'application LLM serveuse, correspondant à la requête LLM adressée par l'UE.

La NRF 144, qui a conservé les paramètres d'identification des applications LLM acquis à l'étape préalable décrite plus haut Figure 3, renvoie en 504 à l'AMF/SMF ces paramètres d'identification de l'application LLM serveuse.

En 505 l'AMF/SMF interroge la PCF pour obtenir les règles QoS correspondantes qui, de la même façon, avaient été reçues et conservées à l'étape préalable de la Figure 3.

Ces règles de QoS sont transmises en 506 par la PCF 145 à l'AMF/SMF, qui, ayant à sa disposition toutes les informations nécessaires, peut déclencher, en 507, l'établissement de la session PDU avec l'UE 110.

D'autre part, en 508 l'AMF/SMF charge dans les UPF 131 du plan utilisateur les règles QoS récupérées de la PCF.

Une fois cette configuration d'ensemble établie, les échanges requête LLM 509/réponse LLM 510 pourront avoir lieu entre l'UE 110 et les applications LLM 201 dans le cloud. Ces échanges seront opérés avec application au niveau des UPF de toutes les règles QoS des rails LLM, de la manière décrite en référence à la Figure 2, c'est-à-dire avec des fonctions UPF dont les tables match-action auront été programmées en fonction des rails LLM que l'on souhaite introduire dans l'échange d'informations entre l'UE et les applications LLM.

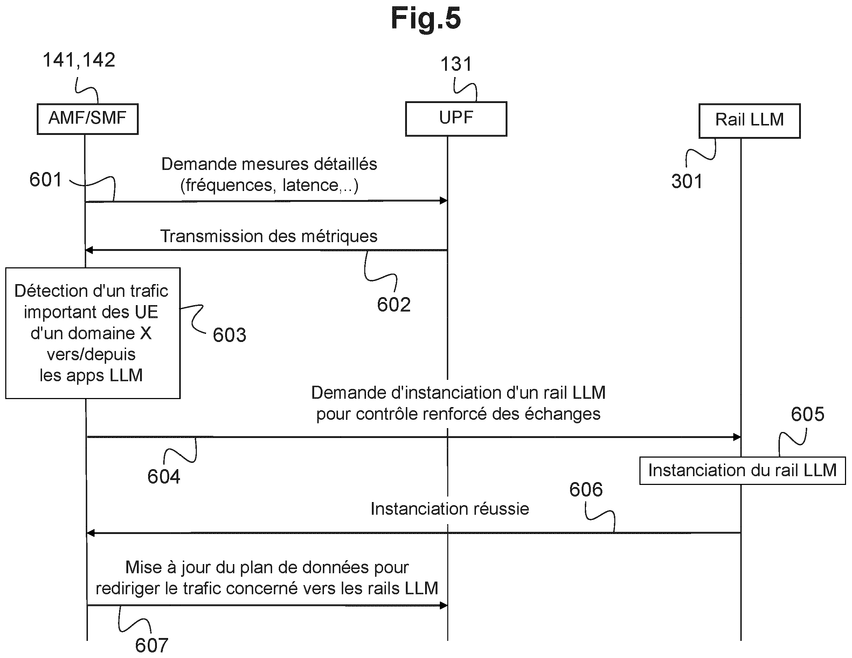

La Figure 5 est un diagramme de flux décrivant une mise en œuvre particulière de l'invention, visant à détecter un trafic anormalement élevé afin si besoin d'en accroître le contrôle par instauration de rails LLM.

La configuration de l'invention permet en effet, en fonction de certaines métriques du trafic des UE, ou des UE d'un domaine spécifique, vers ou depuis les applications LLM, de déclencher automatiquement un contrôle accru de ces échanges par un ou plusieurs rails LLM supplémentaires introduits de façon dynamique, sans interruption des échanges.

Pour ce faire, le plan de contrôle 5G interroge en 601 par l'AMF/SMF les UPF 131 du plan utilisateur pour recueillir un certain nombre de mesures relatives au trafic : fréquence d'utilisation, latence, etc., ces paramètres étant calculés par la programmation (le programme P4 dans le présent exemple) de chaque UPF.

Ces métriques sont transmises en 602 par les UPF au plan de contrôle 5G. Si l'AMF/SMF détecte, en 603, un trafic anormal, par exemple un nombre élevé de requêtes/réponses sur un domaine particulier à destination ou en provenance de certaines applications LLM, une demande d'instanciation d'un rail LLM supplémentaire est adressée en 604 au registre des rails LLM 301. En 605, le rail LLM de contrôle renforcé est instancié au niveau du registre de rails LLM, cette instanciation étant confirmée en 606 au plan de contrôle 5G (fonction AMF/SMF).

En 607, le plan de contrôle 5G met alors à jour la programmation des UPF du plan de données, par exemple par ajout d'une table "match-action" (cf. Figure 2) supplémentaire.

À titre d'exemple, il est ainsi possible de surveiller et contrôler l'utilisation des ressources LLM par les UE d'un domaine donné afin de limiter l'utilisation d'un nombre contingenté de tokens affectés à ce domaine.

En variante, afin de réduire la latence des requêtes, les rails LLM supplémentaires de contrôle renforcé peuvent être instanciés en entrée ou en sortie des applications LLM dans des fonctions réseau virtualisées, VMF, comme illustré en 202 et 203 sur la Figure 1.

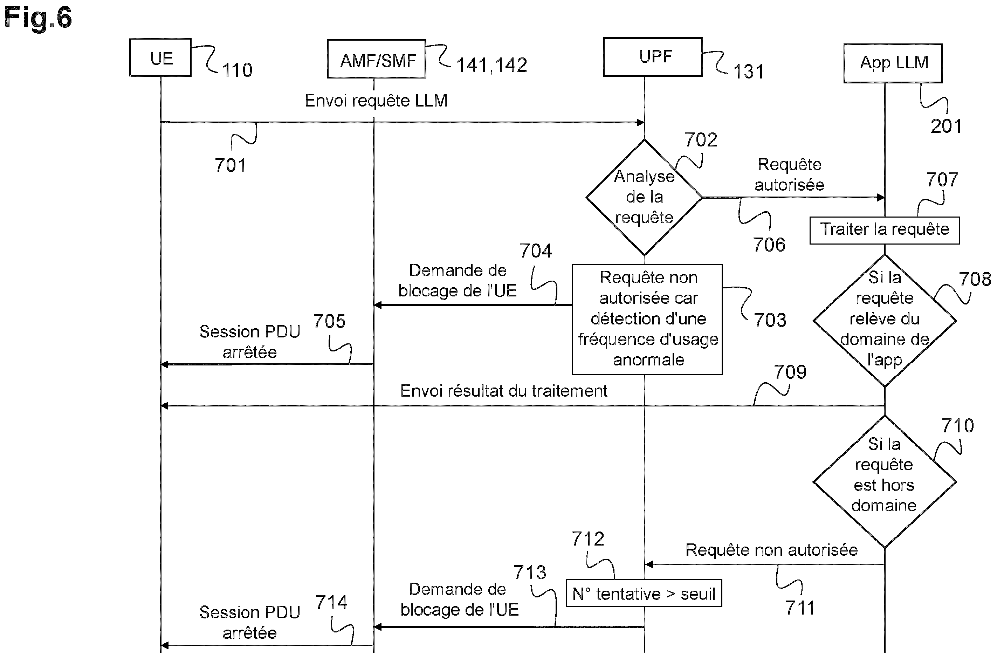

La Figure 6 est un diagramme de flux décrivant une autre mise en œuvre particulière de l'invention, visant à détecter une fréquence d'usage des ressources LLM par un UE qui dépasse une limite autorisée, afin de déclencher en retour le blocage de l'UE fautif.

Lorsque, en 701, l'UE 110 envoie une requête à l'UPF, cette requête est analysée en 702 par l'UPF. S'il est considéré à ce niveau, en 703, que la fréquence d'utilisation des ressources LLM par cet UE est excessive, alors l'UPF adresse en 704 au plan de contrôle 5G (fonction AMF/SMF) une demande de blocage de l'UE fautive, conduisant en 705 à l'arrêt de la session PDU en cours.

Si, à l'étape 702, la requête est autorisée (pas de fréquence anormale d'usage des ressources LLM), la requête est adressée en 706 à l'applications LLM 201, qui va la traiter en 707. L'application LLM examine en 708 si la requête LLM relève ou non du domaine de l'application LLM, c'est-à-dire si l'application LLM (par exemple une application relative à des fonctions de comptabilité) est bien adressée par un UE appartenant au domaine concerné (le domaine du département comptabilité) ou non (un UE d'un autre domaine : marketing, etc.).

Si la requête relève du domaine de l'application, l'application LLM renvoie à l'UE en 709 le résultat du traitement effectué.

En revanche, si en 710 la requête est hors domaine, une notification correspondante est adressée en 711 à l'UPF. L'UPF examine alors si cette requête LLM non autorisée a déjà été émise par l'UE, et combien de fois auparavant, en 712. Si le nombre de tentatives sans succès dépasse un seuil prédéterminé, alors l'UPF adresse en 713 au plan de contrôle 5G une demande de blocage de l'UE (de la même façon qu'en 704 du fait d'une utilisation excessive des ressources LLM), qui entraine en 714 l'arrêt de la session PDU par l'AMF/SMF du plan de contrôle 5G. L'UE sera alors bloqué pour avoir atteint le nombre maximum autorisé de tentatives de requêtes LLM.

## Revendications

1. Une architecture de réseau mobile, pour le traitement de requêtes basées sur des Grands modèles de langage, LLM, émises à destination d'applications LLM et/ou le traitement de réponses renvoyées en retour à des requêtes LLM, par des applications LLM,
l'architecture comprenant un réseau 5G (100) avec :
- un réseau d'accès radio (120), pour la communication radiofréquence avec des équipements utilisateurs, UE (110) ;
- un réseau distribué (130) de Fonctions de plan utilisateur, UPF (131) programmables, faisant également fonction de plan de transport de données 5G pour l'acheminement de paquets de données de/vers les UE (110) ; et
- un plan de contrôle de réseau cœur (140), comprenant des fonctions 5G selon 3GPP,
dans laquelle les UPF (131) du réseau 5G (100) sont programmées pour exécuter localement des rails LLM (301), faisant fonction de garde-fous d'entrée et/ou de sortie LLM à l'égard des requêtes LLM et/ou des réponses LLM, respectivement, par :
- analyse du contenu des requêtes LLM émises par les UE (110) à destination des applications LLM (201), et/ou des réponses LLM renvoyées en retour par les applications LLM (201) à destination des UE (110), par rapport à un corps de règles prédéterminé ; et
- en fonction du résultat de l'analyse, autorisation ou bien blocage de la transmission, via l'UPF (131), de la requête LLM et/ou de la réponse LLM.

2. L'architecture de traitement de la revendication 1, dans laquelle les rails LLM (301) sont conservés dans un registre de rails LLM (300),
dans laquelle le registre de rails LLM (300) est distinct du réseau 5G (100) mais interfacé avec les fonctions 5G du plan de contrôle de réseau cœur (140) du réseau 5G (100),
et dans laquelle l'architecture comprend en outre des moyens pour transformer les rails LLM (301) du registre de rails (300) en programmes aptes à être chargés dans les UPF (131) programmables du réseau 5G (100).

3. L'architecture de traitement de la revendication 2, dans laquelle les rails LLM (301) sont déployés en tant que fonctions réseau containérisées, CNF, sur un serveur conservant le registre de rails LLM (300).

4. L'architecture de traitement de la revendication 1, dans laquelle ledit corps de règles prédéterminé est conservé dans la fonction de contrôle de politique, PCF (145), du plan de contrôle de réseau cœur (140) du réseau 5G (100).

5. L'architecture de traitement de la revendication 1, dans laquelle les UPF (131) du réseau 5G (100) sont en outre programmées pour modifier sélectivement le contenu des données de la requête LLM en fonction dudit résultat de l'analyse des requêtes LLM émises par les UE (110) en cas d'autorisation de la transmission à l'application LLM, notamment par masquage d'un contenu considéré comme confidentiel par ladite analyse.

6. L'architecture de traitement de la revendication 1, dans laquelle les UPF (131) du réseau 5G (100) sont en outre programmées pour :
- évaluer une métrique d'utilisation des applications LLM (201) par les UE (110) ou par un sous-ensemble segmenté d'UE (110) ; et
- déclencher dynamiquement une action en cas de franchissement d'un seuil prédéterminé par la métrique.

7. L'architecture de traitement de la revendication 6, dans laquelle l'action est l'instanciation automatique d'un ou plusieurs rails LLM (301) au franchissement dudit seuil prédéterminé.

8. L'architecture de traitement de la revendication 1, comprenant en outre des moyens de configuration LLM pour, avant traitement de requêtes LLM par une application LLM, enregistrer préalablement un identifiant de l'application LLM (201) dans la fonction de référentiel de fonctions réseau, NRF (144), du plan de contrôle de réseau cœur (140) du réseau 5G (100).

9. L'architecture de traitement de la revendication 1, comprenant en outre des moyens de configuration QoS pour, avant traitement de requêtes LLM par une application LLM, enregistrer préalablement des règles de qualité de service, QoS, propres aux UE (110) ou à des sous-ensembles segmentés d'UE (110), dans la fonction de contrôle de politique, PCF (145), du plan de contrôle de réseau cœur (140) du réseau 5G (100).

10. L'architecture de traitement de la revendication 1, dans laquelle les règles de QoS comprennent des règles relatives à des paramètres de :
- débit binaire ;
- latence ;
- bande passante ;
- nombre maximum de tokens par seconde ;
- proximité du serveur d'applications LLM ;
- préservation de la confidentialité des données émises par les UE ;
- privilèges utilisateur ;
- et toute combinaison des précédents.

11. L'architecture de traitement de la revendication 1, dans laquelle le registre de rails LLM (300) est segmenté en une pluralité de domaines distincts, chaque domaine comprenant un groupe de rails (301) propre à un groupe prédéfini respectif d'UE (110),
et dans laquelle les UPF (131) du réseau 5G (100) sont programmées pour discriminer les UE (110) en fonction du domaine auquel ils appartiennent, et interdire la transmission via l'UPF (131) des requêtes LLM relatives à un domaine auquel n'appartient pas un UE (110) requérant correspondant.

12. L'architecture de traitement de la revendication 1, dans laquelle les UE (110) sont regroupés en domaines distincts,
dans laquelle l'analyse du contenu des requêtes LLM émises par les UE (110) à destination des applications LLM (201) comprend une fonction de découverte de service apte à détecter la disponibilité d'une application LLM particulière pour un UE (110) requérant,
et dans laquelle les UPF (131) du réseau 5G (100) sont programmées pour interdire la transmission via l'UPF (131) des requêtes LLM pour une application LLM (201) relative à un domaine auquel n'appartient pas l'UE requérant (110).

13. L'architecture de traitement de la revendication 1, dans laquelle des niveaux de privilège sont attribués aux UE (110),
et dans laquelle les UPF (131) du réseau 5G (100) sont programmées pour discriminer les UE (110) en fonction du niveau de privilège qui leur a été attribué, et interdire la transmission via l'UPF (131) des requêtes LLM relatives à un niveau de privilège supérieur à celui de l'UE requérant (110),
de manière à opérer ainsi un contrôle de type contrôle d'accès à base de rôles, RBAC, aux applications LLM (201).

14. L'architecture de traitement de la revendication 11, 12 ou 13, dans laquelle les UPF (131) du réseau 5G (100) sont programmées pour discriminer les UE (110) sur la base de l'adresse IP de session attribuée à l'UE (110) requérant, au niveau de la fonction de gestion de session, SMF (142), du plan de contrôle de réseau cœur (140) du réseau 5G (100) .

15. L'architecture de traitement de la revendication 1, dans laquelle les UPF (131) du réseau 5G (100) sont en outre programmées pour compter un nombre de blocages successifs par un UPF (131) à l'encontre de requêtes LLM réitérées en provenance d'un même UE (110), et pour produire un message en retour lorsque ledit nombre dépasse un seuil prédéterminé.

16. L'architecture de traitement de la revendication 1, dans laquelle les UPF (131) sont programmées en langage P4.

17. L'architecture de traitement de la revendication 1, dans laquelle les UE (110) sont des équipements du groupe comprenant des smartphones, des robots autonomes, et/ou des caméras de surveillance vidéo, comprenant un circuit permettant la connexion au réseau 5G (100) et dont le profil est déjà renseigné dans une base d'utilisateurs du réseau cœur (140) du réseau 5G (100).

## Patentansprüche

1. Eine Mobilfunknetzarchitektur für die Verarbeitung von Anfragen, die auf großen Sprachmodellen, LLM, basieren und an LLM-Anwendungen ausgegeben werden, und/oder die Verarbeitung von Antworten, die als Antwort auf LLM-Anfragen von LLM-Anwendungen zurückgesendet werden,
wobei die Architektur ein 5G-Netzwerk (100) umfasst, mit:
- einem Funkzugangsnetz (120) für die Hochfrequenz-Kommunikation mit UE (110);
- einem verteilten Netzwerk (130) von programmierbaren Benutzerebene-Funktionen, UPF (131), das auch als 5G-Datentransportebene für die Weiterleitung von Datenpaketen von/zu den UE (110) dient; und
- einer Kernnetzwerk-Steuerungsebene (140), die die 5G-Funktionen gemäß 3GPP umfasst,
wobei die UPF (131) des 5G-Netzwerks (100) so programmiert sind, dass sie lokal LLM-Leitplanken (301) ausführen, die als LMM-Eingangs- und -Ausgangs-Schutzmaßnahmen gegenüber den LLM-Anfragen bzw. LLM-Antworten dienen, durch:
- Analyse des Inhalts der LLM-Anfragen, die von den UE (110) an die LLM-Anwendungen (201) ausgegeben werden, und/oder der LLM-Antworten, die als Antwort von den LLM-Anwendungen (201) an die UE (110) zurückgesendet werden, in Bezug auf ein vorher festgelegtes Regelwerk; und
- in Abhängigkeit von dem Ergebnis der Analyse, Freigabe oder Sperrung der Übermittlung, über die UPF (131), der LLM-Anfrage und/oder der LLM-Antwort.

2. Die Verarbeitungsarchitektur nach Anspruch 1, wobei die LLM-Leitplanken (301) in einem LLM-Leitplanken-Verzeichnis (300) hinterlegt sind,
wobei das LLM-Leitplanken-Verzeichnis (300) von dem 5G-Netzwerk (100) verschieden ist, jedoch mit den 5G-Funktionen der Kernnetzwerk-Steuerungsebene (140) des 5G-Netzwerks (100) über Schnittstelle verbunden ist,
und wobei die Architektur ferner Mittel umfasst zum Transformieren der LLM-Leitplanken (301) des LLM-Leitplanken-Verzeichnisses (300) in Programme, die in die programmierbaren UPF (131) des 5G-Netzwerks (100) geladen werden können.

3. Die Verarbeitungsarchitektur nach Anspruch 2, wobei die LM-Leitplanken (301) als containerisierte Netzwerk-Funktionen, CNF, auf einem Server eingesetzt werden, auf dem das LM-Leitplanken-Verzeichnis (300) hinterlegt ist.

4. Die Verarbeitungsarchitektur nach Anspruch 1, wobei die vorher festgelegten Regelwerke in der Policy-Kontroll-Funktion, PCF, (145) der Kernnetzwerk-Steuerungsebene (140) des 5G-Netzwerks (100) hinterlegt sind.

5. Die Verarbeitungsarchitektur nach Anspruch 1, wobei die UPF (131) des 5G-Netzwerks (100) ferner so programmiert sind, dass sie den Inhalt der Daten der LLM-Anfrage in Abhängigkeit von dem Ergebnis der Analyse der von den UE (110) ausgegebenen LLM-Anfragen für den Fall der Freigabe der Übermittlung an die LLM-Anwendung selektiv verändern, insbesondere durch Anonymisierung eines Inhalts, der von der Analyse als vertraulich angesehen wird.

6. Die Verarbeitungsarchitektur nach Anspruch 1, wobei die UPF (131) des 5G-Netzwerks (100) ferner programmiert sind zum:
- Bewerten einer Nutzungsmetrik der LLM-Anwendungen (201) durch die UE (110) oder durch ein segmentiertes Endgerät von UE (110); und
- dynamisches Auslösen einer Aktion für den Fall, dass ein von der Metrik vorher festgelegter Schwellenwert überschritten wird.

7. Die Verarbeitungsarchitektur nach Anspruch 6, wobei die Aktion die automatische Instanziierung einer oder mehrerer LLM-Leitplanken (301) bei Überschreiten des festgelegten Schwellenwerts ist.

8. Die Verarbeitungsarchitektur nach Anspruch 1, ferner umfassend LLM-Konfigurationsmittel, um, vor Verarbeitung von LLM-Anfragen durch eine LLM-Anwendung, vorab eine Kennung der LLM-Anwendung (201) in der Netzwerk-Repository-Funktion (NRF) (144) der Kernnetzwerk-Steuerungsebene (140) des 5G-Netzwerks (100) aufzuzeichnen.

9. Die Verarbeitungsarchitektur nach Anspruch 1, ferner umfassend QoS-Konfigurationsmittel, um, vor Verarbeitung von LLM-Anfragen durch eine LLM-Anwendung, vorab für die UE (110) oder für segmentierte Endgeräten von UE (110) spezifische Dienstgüte, QoS-, Regeln in der Policy-Kontroll-Funktion, PCF, (145) der Kernnetzwerk-Steuerungsebene (140) des 5G-Netzwerks (100) aufzuzeichnen.

10. Die Verarbeitungsarchitektur nach Anspruch 1, wobei die QoS-Regeln Regeln in Bezug auf folgende Parameter umfassen:
- Bitrate;
- Latenz;
- Bandbreite;
- maximale Anzahl an Token pro Sekunde;
- Nähe des LLM-Anwendungs-Server;
- Wahrung der Vertraulichkeit der von den UE ausgegebenen Daten;
- Benutzerrechte;
- und jede Kombination der oben genannten Parameter.

11. Die Verarbeitungsarchitektur nach Anspruch 1, wobei das LLM-Leitplanken-Verzeichnis (300) in mehrere verschiedene Domänen segmentiert ist, wobei jede Domäne eine Gruppe von Leitplanken (301) umfasst, die für eine jeweilige vordefinierte Gruppe von UE (110) spezifisch ist,
und wobei die UPF (131) des 5G-Netzwerks (100) so programmiert sind, dass sie die UE (110) in Abhängigkeit von der Domäne, der sie zugehörig sind, diskriminieren und die Übermittlung der LLM-Anfragen über die UPF (131) in Bezug auf eine Domäne, der eine entsprechende anfragende UE (110) nicht zugehörig ist, verhindern.

12. Die Verarbeitungsarchitektur nach Anspruch 1, wobei die UE (110) in verschiedenen Domänen zusammengefasst sind,
wobei die Analyse des Inhalts der LLM-Anfragen, die von den UE (110) an die LLM-Anwendungen (201) ausgegeben werden, eine Diensterkennungs-Funktion umfasst, die imstande ist, die Verfügbarkeit einer bestimmten LLM-Anwendung für eine anfragende UE (110) zu erkennen, und wobei die UPF (131) des 5G-Netzwerks (100) so programmiert sind, dass sie die Übermittlung der LLM-Anfragen über die UPF (131) für eine LLM-Anwendung (201) in Bezug auf eine Domäne, der die anfragende UE (110) nicht zugehörig ist, verhindern.

13. Die Verarbeitungsarchitektur nach Anspruch 1, wobei den UE (110) Benutzerebenen zugewiesen sind,
und wobei die UPF (131) des 5G-Netzwerks (100) so programmiert sind, dass sie die UE (110) in Abhängigkeit von der Benutzerebene, die ihnen zugewiesen wurde, diskriminieren und die Übermittlung der LLM-Anfragen über die UPF (131) in Bezug auf eine Benutzerebene, die höher als die der anfragenden UE (110) ist, verhindern,
so dass dadurch eine Kontrolle vom Typ rollenbasierte Zutrittskontrolle, RBAC, zu den LLM-Anwendungen (201) durchgeführt wird.

14. Die Verarbeitungsarchitektur nach Anspruch 11, 12 oder 13, wobei die UPF (131) des 5G-Netzwerks (100) so programmiert sind, dass sie die UE (110) auf der Grundlage der IP-Adresse, die der anfragenden UE (110) während der Sitzung zugewiesen ist, auf der Ebene der Sitzungsverwaltungs-Funktion, SMF, (142) der Kernnetzwerk-Steuerungsebene (140) diskriminieren.

15. Die Verarbeitungsarchitektur nach Anspruch 1, wobei die UPF (131) des 5G-Netzwerks (100) so programmiert sind, dass sie eine Anzahl an aufeinanderfolgenden Sperrungen durch eine UPF (131) gegenüber LLM-Anfragen, die wiederholt von einer selben UE (110) stammen, zählen, und dass sie als Antwort eine Nachricht erzeugen, wenn die Anzahl einen vorher festgelegten Schwellenwert übersteigt.

16. Die Verarbeitungsarchitektur nach Anspruch 1, wobei die UPF (131) in der Sprache P4 programmiert sind.

17. Die Verarbeitungsarchitektur nach Anspruch 1, wobei die UE (110) Ausrüstungen der Gruppe sind, die Smartphones, autonome Roboter und/oder Videoüberwachungskameras umfasst, die eine Schaltung umfassen, die die Verbindung mit dem 5G-Netzwerk (100) ermöglicht und deren Profil bereits in einer Benutzerdatenbank des Kernnetzwerks (140) des 5G-Netzwerks (100) erfasst ist.

## Claims

1. A mobile network architecture, for processing requests based on Large Language Models, LLMs, issued to LLM applications and/or for processing answers sent back, by LLM applications, in return to LLM requests, wherein the architecture comprises a 5G network (100) with:
- a radio access network (120), for radiofrequency communication with user equipments, UEs (110);
- a distributed network (130) of programmable User Plane Functions, UPFs (131), also acting as a 5G data transport plane for routing data packets towards/from the UEs (110); and
- a core-network control plane (140) comprising 5G functions according to 3GPP,
wherein the UPFs (131) of the 5G network (100) are programmed to locally execute LLM rails (301), acting as LLM input and/or output guardrails as regards the LLM requests and/or the LLM answers, respectively, by:
- analysing a content of the LLM requests issued by the UEs (110) towards LLM applications (201), and/or LLM answers sent back in return by the LLM applications (201) towards the UEs (110), with respect to a predetermined set of rules; and,
- as a function of the result of the analysis, authorizing or blocking the transmission, via the UPF (131), of the LLM request and/or of the LLM answer.

2. The processing architecture of claim 1, wherein the LLM rails (301) are stored in a LLM rail register (300),
wherein the LLM rail register (300) is distinct from the 5G network (100) but interfaced with the 5G functions of the core-network control plane (140) of the 5G network (100),
and wherein the architecture further comprises means for transforming the LLM rails (301) of the rail register (300) into programs adapted to be loaded in the programmable UPFs (131) of the 5G network (100).

3. The processing architecture of claim 2, wherein the LLM rails (301) are deployed as Containerized Network Functions, CNFs, on a server storing the LLM rail register (300).

4. The processing architecture of claim 1, wherein said predetermined set of rules is stored in the Policy Control Function, PCF, (145) of the core-network control plane (140) of the 5G network (100).

5. The processing architecture of claim 1, wherein the UPFs (131) of the 5G network (100) are further programmed to selectively change the content of the data of the LLM request based on said result of the analysis of the LLM requests issued by the UEs (110) when transmission of the LLM application (201) is authorised, in particular by masking a content considered confidential by said analysis.

6. The processing architecture of claim 1, wherein the UPFs (131) of the 5G network (100) are further programmed to:
- evaluate a metric of the use of the LLM applications (201) by the UEs (110) or by a segmented subset of UEs (110); and
- dynamically trigger an action when a predetermined threshold is crossed by the metric.

7. The processing architecture of claim 6, wherein the action is the automatic instantiation of one or more LLM rails (301) when said predetermined threshold is crossed.

8. The processing architecture of claim 1, further comprising LLM configuration means for, before the LLM requests are processed by a LLM application, prior registering an identifier of the LLM application (201) in the Network-function Repository Function, NRF, of the core-network control plane (140) of the 5G network (100).

9. The processing architecture of claim 1, further comprising QoS configuration means for, before the LLM requests are processed by a LLM application (201), prior registering quality of service, QoS, rules specific to the UEs (110) or to segmented sub-sets of UEs (110), in the Policy Control Function, PCF, of the core-network control plane (140) of the 5G network (100).

10. The processing architecture of claim 1, wherein the QoS rules comprise rules relating to parameters related to:
- binary rate;
- latency;
- bandwidth;
- maximum number of tokens per second;
- proximity of the LLM application server;
- preservation of the confidentiality of data issued by the UEs;
- user privileges;
- and any combination of the above.

11. The processing architecture of claim 1, wherein the LLM rail register (300) is segmented into a plurality of distinct domains, each domain comprising a group of rails (301) specific to a respective predefined group of UEs (110),
and wherein the UPFs (131) of the 5G network (100) are programmed to discriminate the UEs (110) based on the domain to which they belong, and to prevent the transmission via the UPF (131) of LLM requests relating to a domain to which a corresponding requesting UE (110) does not belong.

12. The processing architecture of claim 1, wherein the UEs (110) are grouped into distinct domains,
wherein the analysis of the content of the LLM requests issued by the UEs (110) to the LLM applications (201) comprises a service discovery function adapted to detect the availability of a particular LLM application to a requesting UE (110),
and wherein the UPFs (131) of the 5G network (100) are programmed to prevent the transmission via the UPF (131) of LLM requests for a LLM application (201) relating to a domain to which the requesting UE (110) does not belong.

13. The processing architecture of claim 1, wherein privilege levels are assigned to UEs (110),
and wherein the UPFs (131) of the 5G network (100) are programmed to discriminate the UEs (110) based on the privilege level that has assigned thereto, and to prevent the transmission via the UPF (131) of LLM requests relating to a privilege level higher than that of the requesting UE (110),
whereby performing a control of a Role-Based Access Control, RBAC, type to the LLM applications (201).

14. The processing architecture of claim 11, 12 or 13, wherein the UPFs (131) of the 5G network (100) are programmed to discriminate the UEs (110) based on the session IP address assigned to the requesting UE (110), at the level of the Session Management Function, SMF, (142) of the core-network control plane (140) of the 5G network (100).

15. The processing architecture of claim 1, wherein the UPFs (131) of the 5G network (100) are further programmed to count a number of successive blockages by a UPF (131) against repeated LLM requests from a same UE (110), and to issue a return message when said number exceeds a predetermined threshold.

16. The processing architecture of claim 1, wherein the UPFs (131) are programmed in P4 language.

17. The processing architecture of claim 1, wherein the UEs (110) are devices of the group comprising smartphones, autonomous robots, and/or video surveillance cameras, which include a circuit for connection to the 5G network (100) and which profile has already been entered into a user database of the 5G core network (140).
